# EUROPEAN PATENT APPLICATION

(11) **EP 1 302 614 A2**
(43) Date of publication of application: **16.04.2003**
(21) Application number: 02255652.6
(22) Date of filing: 13.08.2002
(51) Int. Cl.: E05B 73/00

(54) **Security holder**

(30) Priority: 14.08.2001 GB 1197839
(71) Applicant: Nally, Vincent, Bowden, WA14 3GW (GB)
(72) Inventor: Nally, Vincent, Bowden, WA14 3GW (GB)
(74) Representative: Atkinson, Peter Birch

(57) **Abstract**

A security holder for an item such as the jewel case of a CD, DVD or the like. The holder comprises a shell defined by a pair of major faces separated by side edges of the shell. The item is inserted through a mouth into the holder between said major faces of the shell. The mouth and the shell are formed as a unitary construction. The mouth is provided with retaining means past which the item may be inserted into the shell but which prevent withdrawal of the item from within the holder.

## Description

The present invention relates to a security holder for preventing theft, particularly by shoplifting, items such as of CD-ROMs, DVDs and cassette tapes.

CD-ROMs, DVDs and cassette tapes (audio or video) with either pre-recorded music, videos or computer programs are manufactured and sold in high volumes.

At the point of retail sale CD-ROMs, DVDs and cassettes are contained within their own plastics casing (known as a "jewel case" for a CD-ROM) and are displayed on racks to which shoppers have free access to select the CD-ROM/DVD/cassette of their choice. This free access does however give rise to problem of theft by shoplifting and potentially the retailer may suffer significant financial loss.

Measures are of course taken to prevent such shoplifting and generally involve fixing, to the plastics casing of the CD-ROM, DVD or cassette, a tag that will activate an alarm system at the exit of the shop unless previously deactivated at the cashier's desk when the CD-ROM, DVD or cassette is purchased. Such measures are successful in deterring stealing of the CD-ROM, DVD or cassette in its casing (e.g. by a shoplifter simply slipping the casing into their pocket or bag).

There is however another possibility for stealing the CD-ROM, DVD or cassette which the aforementioned measures do not address. More particularly, the casings are relatively easy to open so there is the possibility of a shoplifter simply opening the casing and removing the CD-ROM/DVD/cassette whilst leaving the casing in the shop so the security system is not activated when the shoplifter leaves the shop premises with the CD-ROM/DVD/cassette.

In an attempt to avoid the problem set out in the previous paragraph, security holders for holding the CD-ROM/DVD/cassette in its casing have been proposed which are such that the security holder can only be opened to release the CD-ROM/DVD/cassette from its casing by means of a key which is held at the cashiers desk. Furthermore the holder is usually also provided with a security tag described above that must be deactivated at the cashier's desk in order to prevent an alarm being activated at the exit of the shop.

Thus, the potential shoplifter is thwarted either from removing the CD-ROM/DVD/cassette from its casing or from attempting to remove the holder (containing the CD-ROM/DVD/cassette) from the shop.

We have however recognised a disadvantage with the existing holders in that they can only be opened by means of the lock and key. Whilst this is perfectly satisfactory for opening the holder at the cashiers desk, it does not mean that loading an empty holder with a CD-ROM, DVD or cassette in its casing requires the holder to be opened by means of the lock and key, for the casing to be inserted, and then for the holder to be re-locked. All of these are time consuming operations and represent a considerable disadvantage of the existing holders when large numbers of CD-ROMs, DVDs or tapes in their casings are to be loaded into holders.

It is therefore an object of the present invention to obviate or mitigate the abovementioned disadvantages.

According to the present invention there is provided a disposable security holder for an item, the holder comprising a shell defined by a pair of major faces separated by side edges of the shell, and a mouth through which the item may be inserted into the holder between said major faces of the shell, said mouth and shell being formed as a unitary construction and said mouth being provided with retaining means past which the item may be inserted into the shell but which prevent withdrawal of the item from within the holder.

By unitary construction we mean that the mouth (provided with its retaining means) and the shell are fixed together effectively as one component, e.g. integrally moulded together or otherwise bonded to each other (if initially formed as separate components).

The security holder of the invention has a mouth through which the item to be protected from theft may simply be inserted past the retaining means which prevent removal of the item. Thus loading of the shell with the item is a simple and quick operation that does not require unlocking of the holder as with prior devices. When so loaded with the item to be protected, the holder is preferably also provided with a security tag which will activate an alarm system unless the tag is previously deactivated.

Thus the invention provides a holder that is easy to load but which (without destruction of the holder by a potential shoplifter) prevents removal of the item from the holder. Furthermore unless a security tag associated with the holder has been deactivated by the cashier's desk, removal of the holder and item from the shop will activate an alarm.

The resilient means provided in the mouth preferably comprise resilient tongues capable of deflecting inwardly of the mouth to allow insertion of the item therein. However outward deflection of the tongues that would allow removal of the item through the mouth is prevented. There may be provided a pair of resilient tongues in the mouth, the tongues being disposed at opposed locations such as opposed longitudinal edges of said mouth. Preferably the tongues extend substantially along the full length of the mouth.

In another preferred embodiment at each end of the mouth there are three tongues one provided on a width wise edge of the mouth and the other two being provided on the opposed longitudinal edges.

The holder may be of plastics material.

Preferably there is also provided a release tool adapted for insertion into the mouth of the holder so as to deflect said retaining means to allow withdrawal of the item from the holder. The release tool may comprise a main body with a passage therethrough and at least one release element for engagement with said retaining means. The release element preferably comprises one or more upstanding walls which when inserted into the mouth of the holder serve to deflect the tongue(s). The passage in the tool is ideally substantially coextensive with the mouth of the holder.

A clearance may be provided between the release element and the main body of the tool for receipt of side walls of the holder so as to assist in location of the tool to the holder. Location may be further improved by the provision of upstanding side walls on the main body between which the holder is received when the release element is inserted into the mouth.

The holder can alternatively be disposable and as such a person purchasing the item will take from the shop the item in its disposable holder. Subsequently the holder may be destroyed by the purchaser to gain access to the item. For this purpose, it is preferred that the holder is of a plastics material (e.g. polypropylene) which can be cut-open using a pair of scissors or a sharp knife.

If desired, the holder may be provided with a line of weakness along which the cut (as described in the preceding paragraph) may be made to gain access to the item.

The holder is preferably adapted to contain parallelepiped shaped items. Examples of such items include "jewel cases" containing CD-ROMs and DVDs. The "jewel case" may be one containing a "standard size" CD-ROM or a CD-ROM in "mini disc" format" alternatively the item may be a tape cassette in its outer casing which is itself the parallelepiped item. The tape cassette may be in standard or other size (e.g. DAT format).

The holder may of course be used for items other than CD-ROMs, DVDs or cassettes.

The invention will be further described by way of example only with reference to the accompanying drawings, in which:
Fig 1 is a perspective view of one embodiment of security holder in accordance with the invention;
Fig 2 is a section on the line A-A of Fig 1;
Figure 3 is a perspective view of an alternative embodiment of the security holder of the present invention, shown with a release tool;
Figure 4 is a side sectioned view of the holder of figure 3; and
Figure 5 is a sectioned side view of part of the mouth of the holder of the present invention with a release tool inserted therein.

Referring to the drawings, there is illustrated a security holder 1 for a "jewel case" 2 containing a CD-ROM 3.

Holder 1 is comprised of a plastics shell 4 having opposed square (major) faces 5 and 6 as well as three closed side edges 7 and one side edge 8 having a rectangular opening through which the "jewel case" will pass.

One or both of the major faces 5 and 6 may be transparent or have an open window to facilitate viewing of the contents of the holder.
The side 8 is formed with a rectangular mouth assembly 9 which flares outwardly of the interior of the holder 1. For convenience the mouth is shown as being defined by sections 9a-d. At each end of the mouth 9 are three generally rectangular, resiliently deflectable tongues 10 (six in all) projecting into the mouth. At each end of the mouth, the tongues are provided one at the widthwise edge of the mouth and the other two at the adjacent ends of the mouths longitudinal edges. Each such tongue 10 has three of its sides formed as "cut-outs" in the section 9a-d in which it is formed but remains attached along its upper edge to the respective section along a line that provides a hinge about which the tongue may be deflected into the mouth.

The "jewel case" is inserted into the holder 1 via the mouth 9 thereof. Such insertion causes deflection of the tongues 10 about their respective hinges to allow passage of the "jewel case" 2 into the holder. Once the "jewel case" is fully located in the holder, the tongues 10 deflect back to prevent removal of the "case".

The "jewel case" can now only be removed from the holder by destruction thereof, e.g. by cutting with scissors or a knife.

Although not illustrated in the drawing, the holder 1 will also be provided with a tag that will activate a security alarm if the tag is not previously deactivated before the holder 1 is removed from the shop.

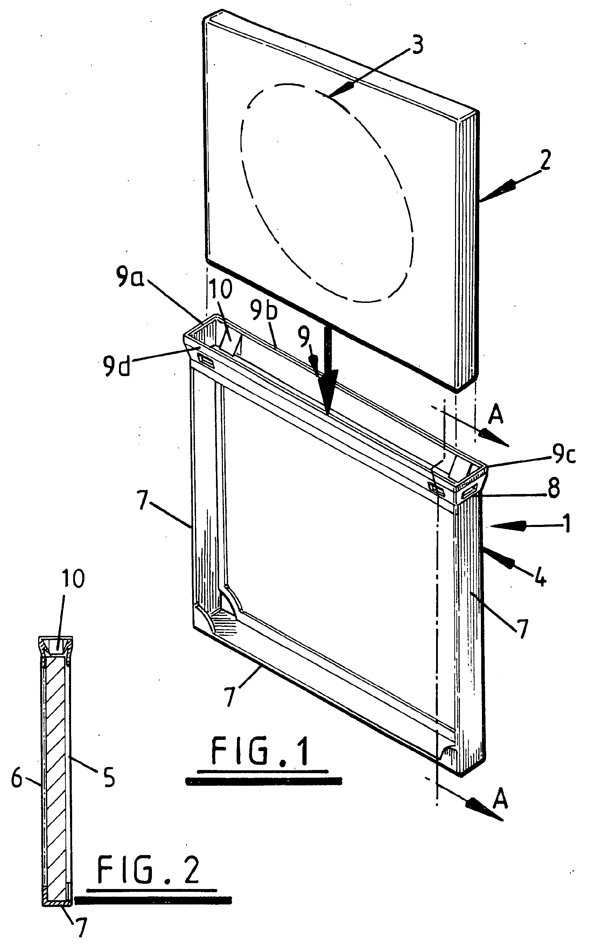

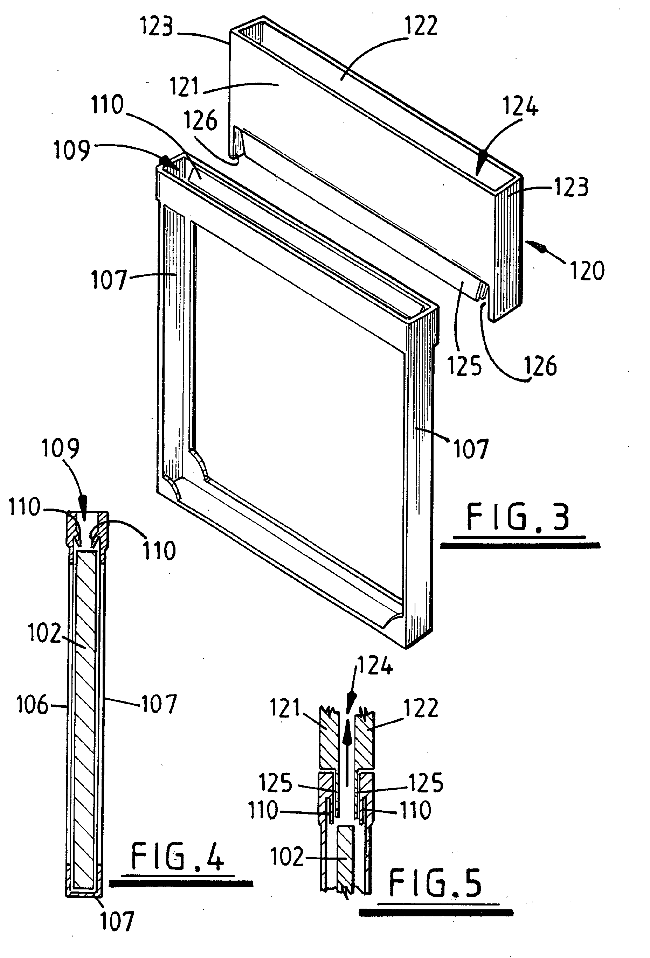

An alternative embodiment is illustrated in figures 3, 4 and 5 in which parts corresponding to those of figures 1 and 2 are indicated by the same reference numerals increased by 100 and are not further described except in so far as they differ from their counterparts of figure 1. Two tongues 110 extend substantially along the full length of the mouth 109 on opposed longitudinal surfaces. The holder of this embodiment is not intended to be removed by cutting but rather a release tool 120 is used to extract the item.

The release tool 120 comprises a generally parallelepiped structure having front 121, rear 122 and side walls 123 that correspond to the major faces 5,6 and side walls 7 of the holder respectively. The walls define a passage 124 of rectangular cross-section that is designed to be slightly larger than the size of the item held in the holder. At one end of the tool 120, the edges of the front and rear walls 121, 122 have relatively thin upstanding fins 125 designed for insertion into the mouth of the holder as will be described below. The fins 125 are shorter in length than the front and rear walls 121, 122 so as to define clearances 126 at each side. The side walls 123 extend beyond the front and rear walls 121, 122 to a height that corresponds roughly to the height of the fins 125.

The tool is of a length slightly longer than the holder so that when the fins 125 are presented into the mouth 109 of the holder (figure 5) the bottom edges of the side walls 107 of the holder are received in the clearances 126. Insertion of the tool 120 into the holder forces the fins 125 against the resilient tongues 110 and serves to deflect them outwardly of the mouth 109. This releases the jewel case 102 and allows it to pass through the mouth 109 and the passage 124 of the tool.

## Claims

1. A security holder for an item, the holder comprising a shell defined by a pair of major faces separated by side edges of the shell, and a mouth through which the item may be inserted into the holder between said major faces of the shell, said mouth and shell being formed as a unitary construction and said mouth being provided with retaining means past which the item may be inserted into the shell but which prevent withdrawal of the item from within the holder.

2. A holder as claimed in claim 1 wherein the mouth is rectangular.

3. A holder as claimed in claim 1 or 2, wherein the retaining means provided in the mouth comprises at least one resilient tongue capable of deflecting inwardly of the mouth to allow insertion of the item therein but preventing withdrawal of the item back through the mouth.

4. A holder as claimed in claim 3, wherein there is provided a pair of resilient tongues in the mouth.

5. A holder as claimed in claim 4, wherein the tongues are provided at opposite locations in said mouth.

6. A holder as claimed in claim 4 or 5, wherein said tongues are located on opposed longitudinal edges of said mouth.

7. A holder as claimed in claim 6, wherein said tongues extend substantially along the full length of the mouth.

8. A holder as claimed in claim 3 wherein at each end of the mouth there are three tongues one provided on a width wise edge of the mouth and the other two being provided on the opposed longitudinal edges.

9. A holder as claimed in any one of claims 1 to 8 which is of a plastics material.

10. A holder as claimed in any one of claims 1 to 9 having a line of weakness to facilitate cutting open of the holder.

11. A holder as claimed in any one of claims 1 to 10 adapted to contain a parallelepiped shaped item.

12. A holder as claimed in claim 11 adapted to contain the case of a CD-ROM or DVD.

13. A holder as claimed in claim 11 adapted to contain the outer casing of a tape cassette.

14. The combination of a holder as claimed in claim 12 and a case containing a CD-ROM or DVD contained within the shell of the holder.

15. The combination of a holder as claimed in claim 12 and a cassette in its casing contained within the shell of the holder.

16. The combination of a holder as claimed in any one of claims 1 to 13 and a release tool adapted for insertion into the mouth of the holder so as to deflect said retaining means to allow withdrawal of the item from the holder.

17. The combination as claimed in claim 16, wherein the release tool comprises a main body with a passage therethrough and at least one release element for engagement with said retaining means.

18. The combination as claimed in claim 17, wherein the release element comprises one or more upstanding walls which when inserted into the mouth of the holder serve to deflect the tongue(s).

19. The combination as claimed in claim 17 or 18, wherein the passage is substantially coextensive with the mouth of the holder.

20. The combination as claimed in any one of claims 17 to 19, wherein there is a clearance between the release element and the main body of the tool for receipt of side walls of the holder.

21. The combination as claimed in any one of claims 17 to 20, wherein the main body of the tool has upstanding side walls between which the holder is received when the release element is inserted into the mouth.
